Europäisches Patentamt

European Patent Office

Office européen des brevets

(11) Publication number: **0 166 558**
**B1**

## EUROPEAN PATENT SPECIFICATION

(45) Date of publication of patent specification: 30.08.89

(51) Int. Cl.⁴: **B 23 Q 7/14**

(21) Application number: **85304252.1**

(22) Date of filing: **14.06.85**

(54) Method of moving a workpiece into a working station and apparatus for use in the method.

(30) Priority: **14.06.84 GB 8415194**

(43) Date of publication of application:
**02.01.86 Bulletin 86/01**

(45) Publication of the grant of the patent:
**30.08.89 Bulletin 89/35**

(84) Designated Contracting States:
**AT BE CH DE FR IT LI LU NL SE**

(56) References cited:
**DE-A-3 101 659**
**DE-A-3 316 050**

**WERKSTATTSTECHNIK, ZEITSCHRIFT FÜR INDUSTRIELLE FERTIGUNG, vol. 73, no. 5, May 1983, pages 291-296, Springer Verlag, Berlin, DE; S. INABA: "Automatisierung in Fertigung und Montage in Unternehmen des elektronischen Gerätebaus"**

(73) Proprietor: **Cincinnati Milacron Inc.**
**(a corporation existing under the laws of Ohio),**
**4701,Marburg Avenue**
**Cincinnati Ohio 45209 (US)**

(72) Inventor: **Whitingham, Clarence Francis**
**29 Orton Lane**
**Wombourne Staffs (GB)**
Inventor: **Myatt, Michael James**
**49 Dosthill Road Two Gates**
**Tamworth Staffs (GB)**

(74) Representative: **Lewis, Samuel Hewitt et al**
**FORRESTER & BOEHMERT Widenmayerstrasse 4/I**
**D-8000 München 22 (DE)**

## Description

Description of the invention

This invention relates generally to machinery utilising interchangeable pallets providing machine tooling and/or workpieces with a common registering base.

More specifically, one aspect of the invention relates to the interchange of pallets in a system which utilises motorised parts for the automatic interchange of pallets between stations.

It is well known in machine tool arts to secure workpieces to pallet bases which have common registering means for interchange on a machine tool. Palletised workpieces are implemented in simple two pallet systems wherein one pallet carried workpiece is shuttled into the machine working zone while the other pallet is serviced by an operator for fixing another workpiece to the pallet. In multipallet systems, pallets may be moved by a conveyor, for example, between varieties of machine tools having a common registering means for accepting the pallets.

Recent developments in the machine tool arts have sought to exploit a manufacturing cell comprised of selected machine tools grouped for a particular manufacturer's needs. To service these machining cells, manufacturers have developed a flexible manufacturing system (FMS) for transferring pallets between machine stations, which does away with the hardware associated with convention conveyors. The present day FMS employs unmanned motorised carts which drive on the machine floor and follow the path of wire embedded in the floor. Radio frequency signal is used to communicate between the floor wire and the cart.

Wire-guided carts are available from a variety of commercial suppliers, for example Eaton Corp. in the United States and AGC Division of Volvo, in Sweden. The carts typically have an internal elevating mechanism for raising and lowering the top deck of the cart. The user must affix part-specific tooling to the top deck of the cart. In certain wire-guided cart applications, not related to precision machine tools, the cart may be positioned solely in response to the signal received from the wire. The stopping or positioning accuracy of the cart is typically within ±.200 inch, or 5 millimetres. This accuracy is sufficient for grossly-positioned objects such as boxes and the like which are to be utilised in packaging systems etc. However, in precision machine tool applications, it is necesary to register the to-be-interchanged pallet precisely with respect to a machine station. Therefore, supplemental registering means for the cart must be employed. A common positioning means used in machine systems for positioning wire-guided carts is to equip the cart with at least one detent socket, and to have a precisely positioned detent pin positioned in the machine floor proximal the machine site. When the cart is grossly positioned through its inherent stopping accuracy, the detent pin is fired into the detent socket of the cart and serves to pull the cart into an aligned position. Thereafter, the precisely aligned pallet on the cart may be successfully interchanged with the machine station. Here it should be noted that the elevational capability of the cart is utilised to bring the pallet precisely into a vertical alignment with the machine station for the interchange. Also, it should be noted that the pallet leaves the part-specific tooling completely intact on the cart. Typically, the cart will remain at the machine site until a pallet is loaded onto the cart.

Several problems are inherent in the prior art usage of wire-guided carts: the detent pin extending from the floor serves as a collection site for swarf, grit and other deleterious matter; the pin encounters great forces as it attempts to move the combined weight of the pallet, pallet tooling, and cart into correct alignment with the machine; and, the cart is generally tied up at the machine site during the machine working time because of the detent assembly required to locate and fix the cart.

The apparatus disclosed in DE—A—3 316 050 provides for means to index a pallet transport means with respect to a docking station for transferring the pallet from a cart directly onto a docking station. This apparatus is, however not provided to release the pallet transport means from the cart.

According to a first aspect of the invention, there is provided a palletised part-handling apparatus comprising a plurality of pallets as common tool or workpiece bases, movable guided carts for transferring said pallets from one station to another, pallet transport means on each cart for supporting and locking a pallet during transfer movements, a stationary docking station for receiving a transferred cart and pallet and means for releasing the pallet from the pallet transport means at the docking station, further comprising holding means for supporting and locking the pallet transport means on the cart during transfer movements and of means for releasing the pallet transport means from the holding means to the docking station whereby the docking station includes means for receiving the pallet transport means at a predetermined position.

In use of apparatus in accordance with the first aspect of the invention, the pallet transport means can be deposited at a docking station, thus leaving the cart free to effect other transfers, whilst the pallet and pallet transport means previously borne by the cart remain within the docking station and an adjacent machining station. Furthermore, the positioning of the cart relative to the docking station can be controlled with sufficient accuracy by radio-frequency signals from a wire embedded in the floor.

There is also provided, in accordance with the present invention, a method of interchanging a workpiece between a cart and a working station as defined in the claims appended hereto.

An example of apparatus in accordance with the present invention and which is used in a method according to the invention will now be described, with reference to the accompanying drawings, wherein:

Figure 1 is a side elevation of a known wire-guided cart assembly,

Figure 2 is a perspective view of a known pallet,

Figure 3 is a side elevation of a wire-guided cart and pallet transport assembly embodying the present invention,

Figure 4 is a perspective view of the cart of Figure 3, showing the top deck;

Figure 5 is a cross-section through a ball castor and locating pin of the top deck of the cart of Figure 3, taken along the line 5—5 of Figure 4,

Figure 6 is a section through the ball castor assembly along the line 6—6 of Figure 5,

Figure 7 is a perspective view from the front of the pallet transport assembly entering a docking station,

Figure 8 is a perspective view from the front of the elements of Figure 7, after the pallet transport has been lowered onto locating pads of the docking station,

Figure 9 is a perspective view of the elements of the docking station shown in Figure 7, in the absence of the pallet transport,

Figure 10 is a side elevation of the docking station, as viewed in the direction of arrow 10 of Figure 8,

Figure 11 is a front elevation showing the pallet transport crank in a fully raised and in a fully lowered position, as viewed along the line of 11—11 of Figure 10,

Figure 12 is a section through the pallet transport crankshaft along the line 12—12 of Figure 10,

Figure 13 is a section through the crank and crankshaft along the line 13—13 of Figure 12,

Figure 14 is a front elevation of the docking station,

Figure 15 is a plan view of the pallet transport,

Figure 16 is a section through the crankshaft and movable socket of the pallet transport along the line 16—16 of Figure 15,

Figures 17, 17a and 17b are sections in a transverse plane through the movable socket and a hardened ball wear pad of the pallet transport in the positions: transport fully down at the docking station; transport initial contact with raising ball castor; and transport fully raised position at the docking station; respectively,

Figures 18, 18a and 18b are sections through the pallet locking pin of the pallet transport in the positions: pallet transport fully down at the docking station; transport initial contact with the raising ball castor and transport in the fully raised position at the docking station; respectively, and

Figures 19, 19a and 19b are sections in a fore-and-after plane through the docking station locating pin and transport guide bushing showing the pallet transport in the following positions: transport fully down at the docking station; transport initial contact with raising ball castor and transport fully raised at the docking station; respectively.

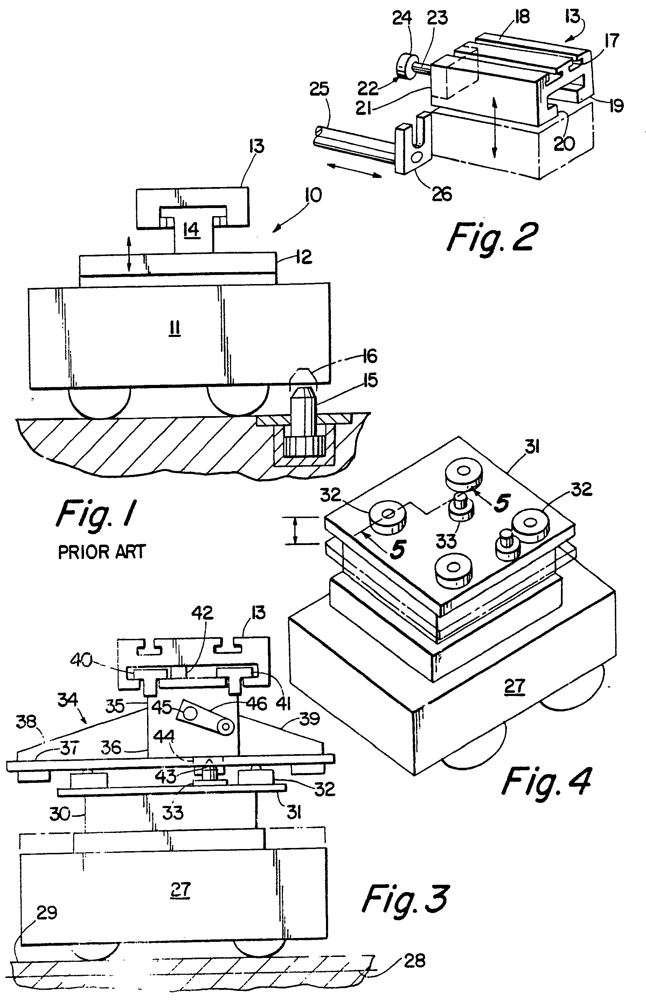

Referring to the drawings, Figure 1 depicts a guided cart system 10 of the prior art, wherein a wheeled unmanned cart 11 has a top deck 12 which is movable in vertical directions, and a pallet 13 is carried on specific tooling 14 mounted to the top deck 12 of the cart 11. The pallet 13 is transported to a machine station (not shown). At the machine station, a tapered locating pin 15 which is mounted in the floor is powered up into a companion socket 16 in the cart 11, to provide accurate horizontal positioning of the cart 11 for the interchange of pallets 13 with the machine station. An elevating assembly within the cart 11 provides the vertical accuracy of position for the pallet interchange to take place.

Figure 2 depicts a typical pallet 13. The pallet 13 is a generally rectangular block of cast iron, having a series of "T"-slots 17 machined in its upper surface 18, for mounting tooling and/or workpieces. The bottom surface 19 of the pallet has large "T"-slot 20 machined throughout, so that a rectangular way system is created for sliding the pallet 13, and the "T"-slot facilitates pallet clamping at a machine station. One end 21 of the pallet 13 is fitted with a stud 22 having a stem 23 and an outboard enlarged head 24. The machine station is provided with a push-pull rod 25, having a bifurcated end plate 26 which is able to trap the head of the pallet stud 22, as the pallet 13 is lowered. In such fashion, the rod 25 therefore can move the pallet 13 into, or out of, a machine station at interchange time.

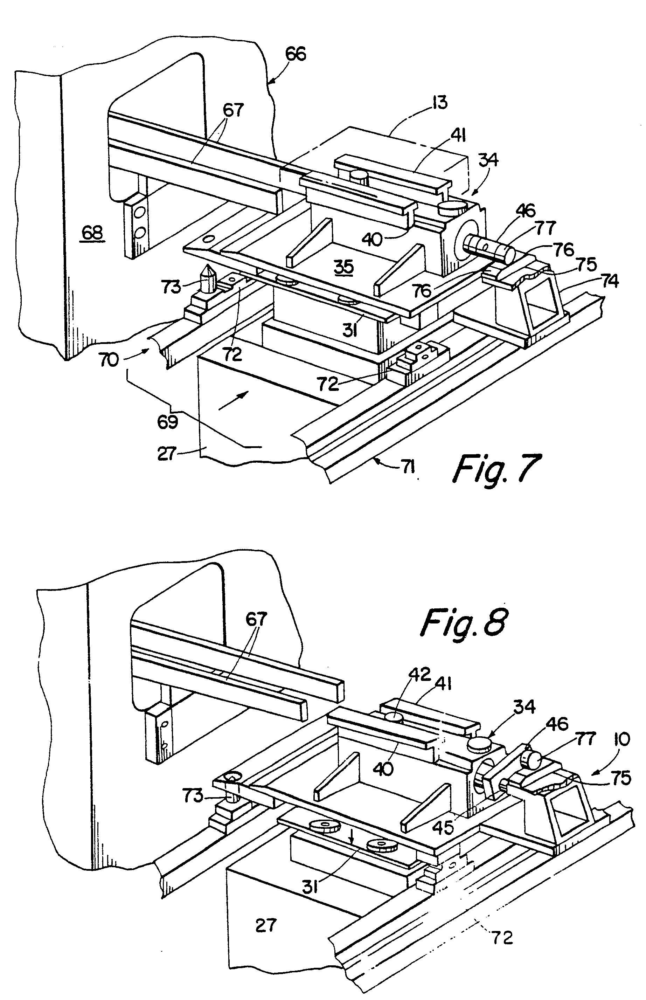

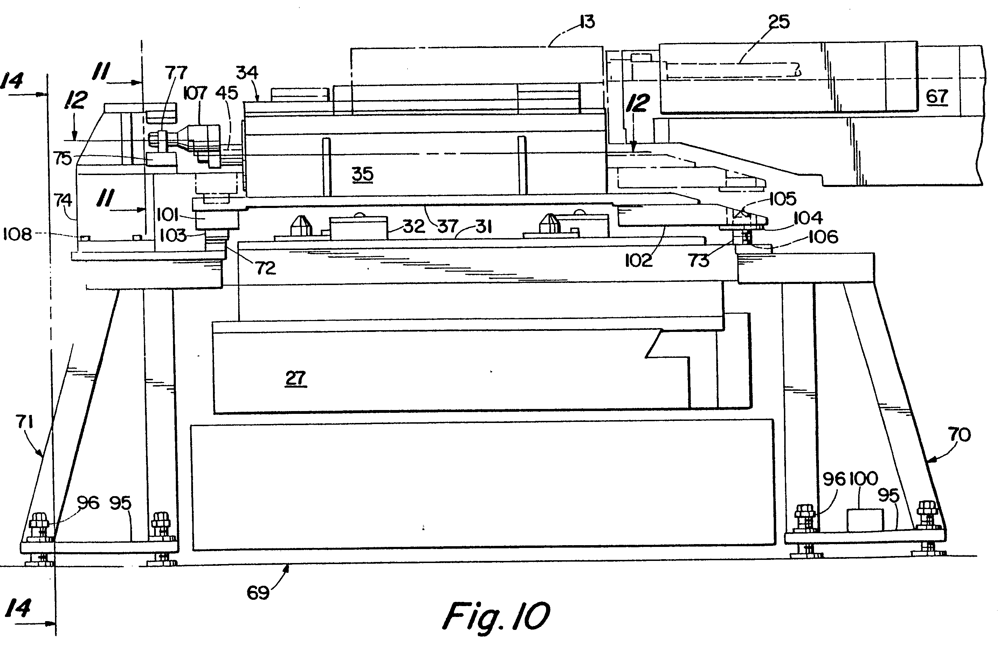

The elevational view of Figure 3 illustrates the present invention, wherein a wire-guided cart 27 i.e. an unmanned wheeled vehicle guided from a signal wire 28 embedded in the floor 29, has an elevatable top deck 30, which is fitted with a unique deck plate 31. The deck plate 31 has a plurality of ball castors 32 secured thereto, and a pair of tapered locating pins 33 are also secured to the deck plate 31. The ball castors 32 support a separate pallet transport 34 comprised, in part, of a housing 35 having an enclosed box structure 36 (which is fabricated weldment), welded to a bottom plate 37. A plurality of stiffening ribs or gussets 38, 39 are welded to the sides of the box structure 36 and the plate 37 and a pair of hardened "T"-shaped, rails 40, 41 are affixed to the top side of the transport housing 35. A pallet locking pin 42 is shown extending upward from the transport housing 35 and engaging the pallet 13 during the time of transport. The pallet 13 is therefore locked in position on the "T"-shaped ways 40, 41 until interchange time when the pallet locking pin 42 is retracted into the housing 35. The tapered locating pin 33 of the cart deck plate is shown engaging a movable socket i.e. a tapered socket 43 formed in a cylindrical socket rod 44 extending from the bottom plate 37 of the transport housing 35, thus preventing relative movement between the cart 27 and transport 34 during transportation. The crankshaft 45 and the crank 46 shown at the end of the pallet transport 34 are spring-biased in a clockwise direction to the position shown i.e. approximately 30° below the horizontal. When the crank 46 is relatively moved in a counterclockwise direction with respect to the transport housing 35 (see figures 7 and 9), the pallet locking pin 42 and socket rod 44 will retract into the housing 35.

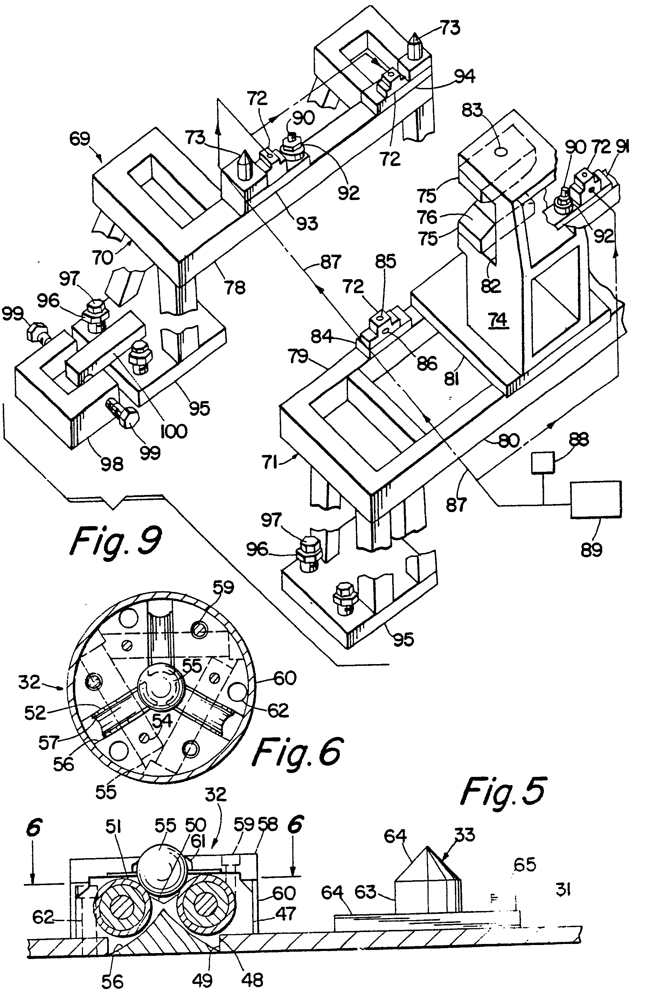

The perspective view of Figure 4 shows the cart 27 of Figure 3 with the pallet transport 34 removed to show the deck plate 31. The four ball castors 32 are shown in a squared pattern, and the two tapered locating pins 33 are secured to the deck plate 31 between the castors 32. The sectional view of Figure 5 depicts in enlarged fashion, the locating elements of Figure 4, wherein the ball castor 32 is comprised of a short cylindrical housing 47 having a pilot diameter 48 received in a locating pilot hole 49 in the deck plate 31. A clearance-drilled hole 50 is provided in the top 51 of the housing 47, and a plurality of rollers 52 are received on horizontal pins 53 locked in the housing 47 by set screws 54 (see Figure 6). As Figure 6 depicts, the three rollers 52 are equally spaced around the ball 55, and are contained from side movement by clearance slots 56 cut through the housing 47. The rollers 52 have a concave groove 57 to conform to the ball 55. As shown in Figure 5, the ball 55 is seated in the rollers grooves 57 and is prevented from outward movement by a cover 58 which is received on the castor housing 47 and secured by screws 59. The cover 58 has a cylindrical skirt 60 welded thereto which extends along the cylindrical body of the housing 47. The cover 58 has a clearance hole 61 drilled from its underneath side to such depth that the tapered drill point will not break through, and the resulting diameter in the top of the cover 58 will clear the exposed ball surface, yet prevent the ball 55 from escaping. Mounting screws 62 are provided through the castor housing 47 to secure the assembly to the deck plate 31.

The tapered locating pin 33 has short straight pin section 63 with a conical point 64 at the top, and a flange diameter 64 is provided at the bottom for mounting against the deck plate 31. A plurality of screws 65 passing through the flange diameter 54 secure the locating pin 33 in position on the deck plate 31.

Referring to Figure 7, a machine station 66 is shown having pallet-receiving machine ways 67 extending from the machine 68. Here it may be noted that the machine station 66 may comprise any station with pallet-receiving ways 67, a metal cutting machine; inspection machine; a washing machine; and pallet storage mechanism, etc. A pallet transport docking station 69 is shown, generally comprising spaced-apart rail brackets 70, 71. A plurality of flat, hardened, locating pads 72 are mounted to the brackets 70, 71 to provide vertical location for the pallet transport 34, while a plurality of fixed tapered locating pins 73 are used to provide horizontal location for the transport 34. As Figure 7 depicts, the cart 27 has the deck plate 31 elevated to the topmost position, i.e. normally used when the cart 27 is cruising through a machine system. The pallet transport 34 is shown supporting a pallet 13 (in phantom) on its "T"-shaped ways 40, 41. A cam support bracket 74 is mounted to one decking station bracket 71, and the cam bracket 74 supports a hardened cam plate 75 which is essentially a horizontal plate having lead-in ramp surfaces 76 at each end. As will be discussed further in conjunction with Figure 9 there are two cam plates 75 used, but the lower one depicted in Figure 7 is actively used to actuate the transport release mechanism. The crank 46 shown in Figure 7 is in the "normally down", spring-biased position relative to the transport housing 35. The crank 46 has an antifriction cam follower 77 extending into proximity with the cam plate 75.

Following on to Figure 8, the transport 34 is shown immediately after the deck plate 31 is lowered in the direction of the broad arrow, to such position where the transport 34 is vertically positioned on the hardened, flat locating pads 72 and is horizontally positioned by the tapered locating pins 73 so that the "T"-shaped transport ways 40, 41 are in line with the machine ways 67 and the pallet may successfully slide into the machine station 66. As can be seen in Figure 8, the cam follower 77 of the crank 46 is shown in contact with the cam plate 75, and the lowering of the crank shaft 45 about the cam followed 77 (due to the weight of the pallet transport 34) causes the crank 46 to relatively move in a counterclockwise direction, overcoming the internal spring-biasing force. Thus, the pallet locking pin 42 and the socket rod 44 (not shown but extending from the bottom of the pallet transport housing) are retracted.

Turning now to the perspective view of Figure 9, the docking station 69 is shown with the pallet transport removed for clarity, and the station is comprised of two independent parallel brackets 70, 71 which are fabricated from square hollow structural steel tubing. One bracket 70 has a single rail 78 extending along its top surface, and the other bracket has double rails 79, 80 extending along its top surface. The single rail bracket 70 is positioned alongside the machine station 66 (see Figure 7) so that the machine ways 67 may be brought as close as possible to the pallet transport 34. The double rail bracket 71 provides support for the cam bracket 74 which subtends the two rails 79, 80. The cam bracket 74 is a fabrication affixed to a plate 81 welded to the two rails 79, 80 and the cam bracket 74 has a facial slot 82 formed in the side disposed toward the opposite station bracket 70. The slot 82 contains the two identical cam plates 75, which are fastened with screws 83 to the cam bracket 74. The lead-in ramp surface 76 of the cam plates 75 serves to provide a smooth entry for the cam follower 77 due to any positioning misalignments of the crank 46 (see Figures 7 and 8) with respect to the docking station 69. The double rail bracket 71 has a pair of hardened locating pads 72 spaced apart along its inside rail 79, and the pads 72 are fastened to a plate 84 which is welded to the inside rail 79. The locating pad 72 has a small hole 85 drilled in its top surface, and a horizontal hole 86 is drilled and pipe-tapped in one side of to interconnect with the vertical hole 85. All locating pads 72 are connected to an air pressure line 87 which in turn, has a pressure switch 88 to sense when the air flow from an air source 89 is closed off, therefore, signalling when a pallet transport 34 is "fully down" and positively located on the pads 72. A proximity switch 90 is threadably received through the rail plate 91 supporting the rear locating pad 72 of the inside rail 79. The proximity switch 90 is adjustably held in position by a locknut 92, and serves to indicate the presence of a pallet transport 34. The single rail bracket 70 likewise supports corresponding locating pads 72, and the front pad plate 93 has a proximity switch 90 threadably received therethrough and secured with a locknut 92 in a similar fashion to that of the double rail bracket 71. In addition to front and rear locating pads 72, a pair of hardened tapered locating pins 73 having rectangular bases extend vertically from the rail plates 93, 94 of the single rail bracket 70. The conical locating pins 73 serve to provide horizontal positioning for the pallet transport 34. Flow of air through the holes 85 cleans the mutually facing surfaces of the locating pads as these approach one another. Use of the pressure switch 88 to provide a "fully down" signal is optional. The proximity switches 90 are alternatives to the pressure switch 88 but may be used in addition thereto.

The docking station brackets 70, 71 have side-extending shelves 95 welded to the bottom, and each shelf 95 contains a pair of levelling screws 95 which are used to adjust the vertical position of the brackets 70, 71. Once the brackets 70, 71 are precisely located in a vertical direction, a central screw 97 passing through the hollow levelling screw 96 serves to lag the assembly down tight to the floor in a conventional manner. The double rail bracket 71 need only be positioned accurately in a vertical direction, but the single rail bracket 70 must be positioned in a horizontal direction as well since it carries the conical locating pins 73 which positively locate the transport 34 with respect to a machine station 66. Therefore, a pair of "U"-shaped brackets 98 are provided on the floor adjacent the single rail bracket 70 and horizontal screws 99 received through the "U"-shaped bracket 98 react against a welded tang 100 extending from each shelf 95 of the single-rail bracket 70 to provide horizontal adjustment.

Figure 10 depicts an end view of the docking station 69, showing the pallet transport 34 supported in the "fully down" position on the single rail and double rail brackets 70, 71. The bottom plate 37 of the transport housing 34 has a plurality of welded plates 101, 102 which, in turn, carry hardened locating pads 103 to mate with the locating pads 72 of the brackets 70, 71. The cart 27 is shown in phantom, with its deck plate 31 lowered so that the ball castors 32 no longer contact the transport housing 35. The transport housing 35 contains a hardened, flanged bushing 104 which has a central bore 105 adapted to fit closely with the tapered locating pin 73 of the single rail bracket 70. A lead-in-taper 106 is machined in the bushing 104 at the same angle as the conical point of the pin 73 so that misalignment of the transport 34 may be accommodated and overcome as the transport 34 is manoeuvred into position by the lowering deck plate 31. The pallet 13 is pulled by the machine push/pull rod 25 onto the machine ways 67 at one end of the transport i.e. the end nearest the single rail bracket 70 of the docking station 69. The crankshaft 45 extends from the other end of the transport housing 35, and the antifriction cam follower 77, mounted to a crank pin 107, is shown in contact with the lower cam plate 75. The cam plates 75 are carried by the cam bracket 74 which is fixed by screws 108 to the support plate 81 of the double rail bracket 71. The phantom positions of the cam follower 77 depict that initial endwise positioning inaccuracies may be accommodated but, as the transport 34 is lowered onto the tapered locating pins 73, the transport 34 will be pulled into proper alignment.

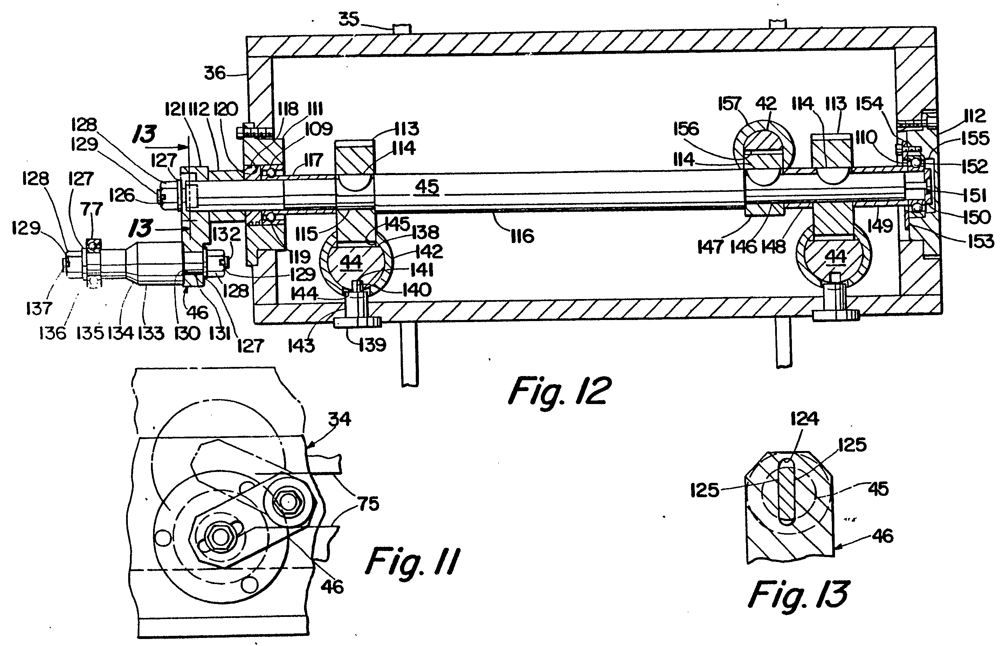

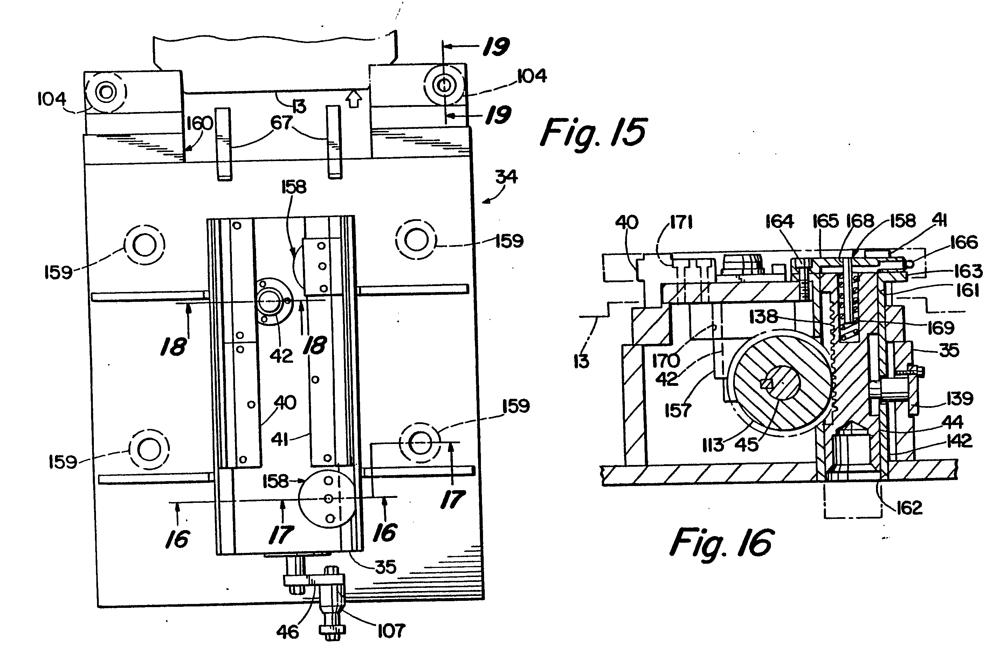

Figure 11 is an end view of the crank 46, showing (in solid) the "fully down" position, wherein the crank 46 is rotated in a counterclockwise direction to a position approximately 30° above the horizontal line. The phantom position of the crank 46 depicts the pallet transport 34 in the "fully raised" position wherein the internal spring-biasing force (which will be discussed in connection with Figure 15) restores the crank 46 to its fully clockwise position. As can be seen in Figure 11, the space between the upper and lower cam plates 75 provides clearance around the cam follower 77, so that during the initial portion of a lowering motion, the crank 46 will not be moved.

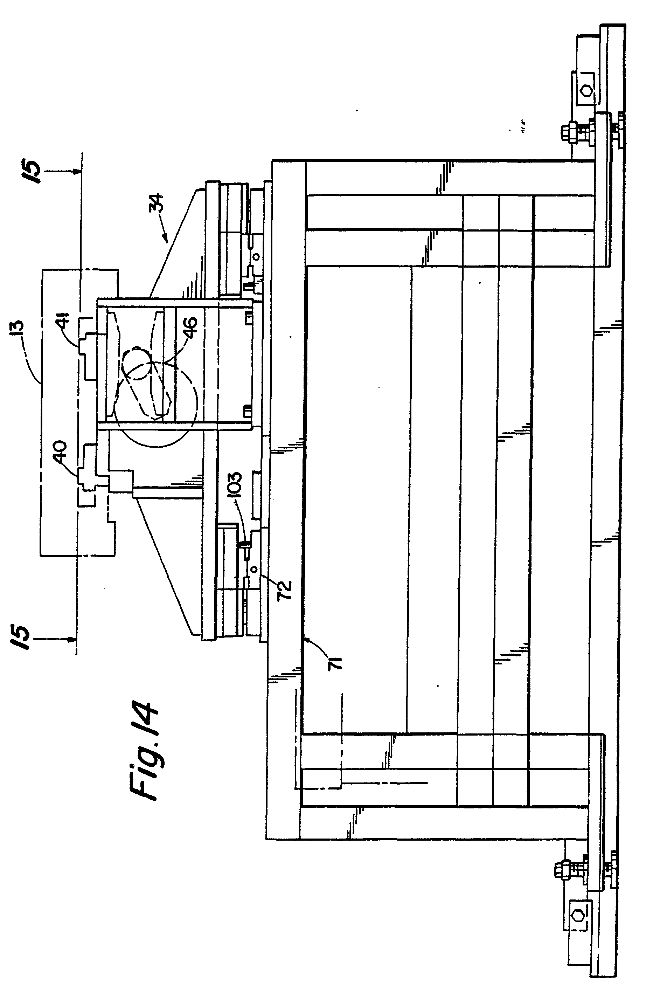

The section shown in Figure 12 is taken through the crankshaft 45, shown mounted in front and rear bearings 109, 110 which in turn, are supported in front and rear bearing caps 111, 112 affixed to the box structure 36 of the transport housing 35. The forward end of the crankshaft 45 extends from the housing 35 and supports a gear 113 within the housing 35. A woodruff key 114 serves to connect the gear 113 to the shaft 45. The gear 113 is located on a reduced diameter 115 of the crankshaft 45 and is shouldered against the large main diameter of the shaft 45. A spacer sleeve 117 is provided on the crankshaft 45 between the gear 113 and the bearing 109 so that the gear 113 will not move axially. The bearing 109 is retained in the front bearing cap 111 by a front retaining ring 118 received in the bearing cap 111 and loaded against the inner race of the bearing 109. The outer race of the bearing 109 is shouldered against the end 119 of the bearing bore 120. The crank 46 has a straight arm portion 121 and a hub 122 is welded to the arm 46a. A bore 123 is provided through the hub 122 and arm 121. The crankshaft 45 has a pair of side flats 125 machined to provide a thin width which will fit closely in the slot 124 of the arm 121 to create a torque couple between the two, as shown in Figure 13. A threaded end 126 is provided on the crankshaft 45 and a washer 127 and castellated locknut 128 are provided thereon. A cotter pin 129 is received through the shaft 45 to prevent the nut 128 from backing off. The outboard end of the crank 121 arm has a hole 130 parallel to the crankshaft 45, and a crank pin 107 is mounted in the hole 130. The crank pin 107 has a pilot diameter 131 received through the hole 130 and a washer 127 and castellated locknut 128 are held by a threaded end 132 of the crank pin 107. A cotter pin 129 is received through the crank pin 107. The crank pin 107 has a large main diameter 133 extending from the outer face of the crank arm 121, and the crank pin 107 is reduced at a tapered section 134 to a small shoulder diameter 135, extending to a smaller bearing diameter 136. The bearing diameter 136 supports the antifriction cam follower 77 which is entrapped against the shoulder diameter 135 by a washer 127, and locknut 128, and cotter pin 129, received on the threaded outboard end 137 of the crank pin 107.

The crankshaft gear 113 is enmeshed with a vertical rack portion 138 of the movable socket rod 44. The socket rod 44 is prevented from rotating by means of a headed pin 139 received in the side of the transport housing 35 and having a keying nose 140 engaged in a key slot 141 of the socket rod 44. A guide sleeve 142 is received around the socket rod 44 and prevented from rotating by a pilot diameter 143 of the pin 139 received in a hole 144 through the side of the guide sleeve 142. The gear 113 extends through a clearance slot 145 in the sleeve 142. The rear end of the crankshaft 45 is reduced from the main diameter 116, and the reduced diameter 146 extends through: a short lever 147; a spacer ring 148; and a drive gear 113. The lever 147 and gear 113 are connected through woodruff keys 114 to the shaft 45. The gear mesh 113 is in mesh with a rack portion 138 of the second socket rod 44 as previously described. A spacer ring 149 is received on the shaft 45 between the gear 113 and the end bearing 110, and the assembly is locked together by an end plate 150 held to the inner race of the bearing 110 by a screw 151 received in the end of the crankshaft 45. The bearing 110 is constrained against axial movement in the rear bearing cap 112 by a shoulder 152 at the inboard end of the bearing bore 153, and a retaining ring 154 provided on the bearing cap 112. A clearance bore 155 provided in the bearing cap 112 extends around the retaining plate 150 of the crankshaft 45. The crank lever 147 is engaged with a slot 156 in the side of the pallet locking pin 42 to provide vertical movement of the locking pin 42 through its guide bushing 157.

The elevational view of Figure 14 is shown looking at the transport 34 from the side of the double rail bracket 71. The view is depicted with the transport 34 in the "fully down" position, i.e. with the crank 46 rotated in a counterclockwise direction and having a pallet 13 ready for interchange on the transport ways 40, 41. The hardened locating pads 103 of the transport 34 are shown in contact with the locating pads 72 of the brackets 70, 71.

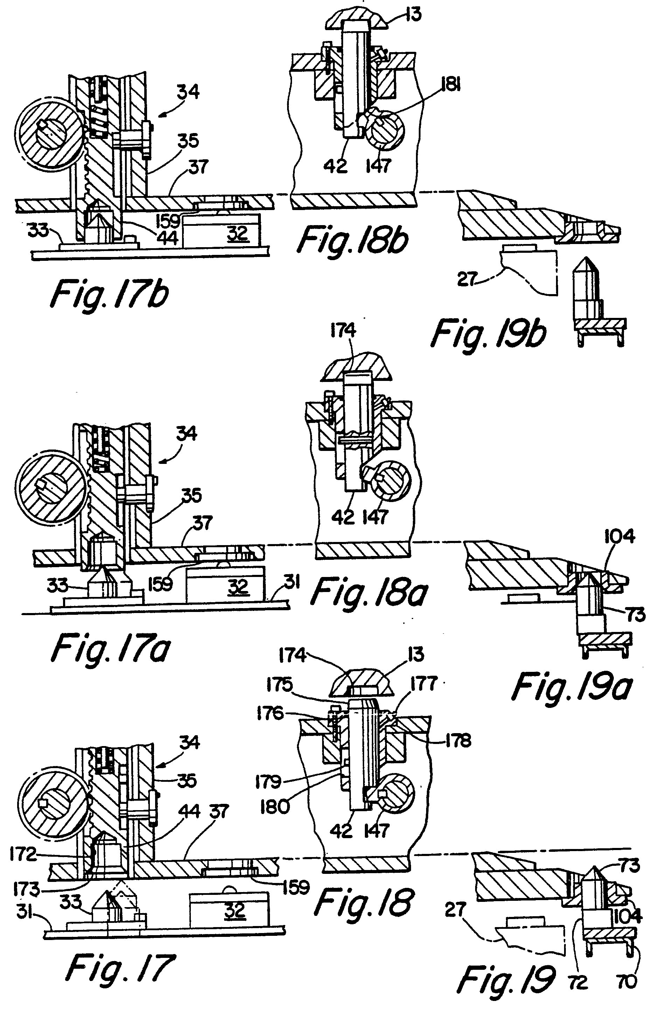

Figure 15 is a plan view of the pallet transport 34. The crank 46 and crank pin 107 are seen extending from one side of the transport housing 35. The pallet locking pin 42 is shown between the pallet support ways 40, 41. The transport housing 35 contains the pair of socket rod assemblies 158 which will be more fully depicted in the sectional view of Figure 16. Four hardened circular locating pads 159 are provided on the pallet transport 34 to prevent wear at the ball castor sites. The four flat locating pads 103 are shown affixed to the bottom surface of the transport 34 to provide for vertical positioning while the two pin bushings 104 are shown affixed to one side of the pallet transport 34 for the horizontal positioning of the unit. One side of the transport housing has a central relief 160, to provide clearance for machine ways 67 which may extend into close proximity with the pallet support ways 40, 41 of the transport 34.

Figure 16 is an elevational section through the crankshaft 45 and the socket rod assemblies 158. The socket rod 44 is shown having its rack portion 138 in mesh with the crankshaft gear 113. The socket rod 44 slides in the guide sleeve 142 which extends through bores 161, 162 in the top and bottom walls of the housing 35. The top of the guide sleeve 142 has a flange 163, and screws 164 pass through a cover plate 165 and the flange 163 to secure the assembly 158 to the transport housing 35. A grease fitting 166 is provided in the side of the cover plate 165 with suitable interdrilling to introduce grease into the assembly 158. The socket rod 44 is provided with a blind clearance hole 167 drilled to approximately one-fourth of the overall length. A guide pin 168 affixed in the cover plate 165 extends into the clearance hole 167 approximately to full depth when the socket rod 44 is in the fully retracted position (shown). A preloaded spring 169 is received in the clearance hole 167, reacting against the rod 44 and cover plate 165, to normally bias the socket rod 44 downward, thus rotating the crankshaft 45 in a clockwise direction. When the socket rod 44 is in the downmost extended position (in phantom) the guide pin 168 serves to keep the spring 169 from buckling. Figure 16 further shows the pallet locking pin 42 in the fully retracted position. The locking pin 42 is guided in a bushing 157 located in a cylindrical bore 170 in the housing 35. The pallet guide ways 40, 41 are secured to the transport housing 35 by a plurality of cap screws 171.

Figures 17, 18 and 19 should be viewed simultaneously, since they are related in time and space. The bottom plate 37 of the transport housing 35 is common to all views and is shown therefore by a phantom line connecting the views for ease of understanding. The location of all elements occurs with the deck plate 31 of the cart 27 in the "fully down" position i.e. with the ball castor 32 and tapered locating pin 33 away from the pallet transport 34. The pallet transport 34 is seated on the locating pads 72 and having its bushing 104 (see Figure 19) journalled on the tapered locating pin 73 of the single rail bracket 70. The socket rod 44 is shown in the retracted position, i.e. within the transport housing 35. The socket rod 44 has a precision socket bore 172 closely-machined to fit the locating pin 33 of the deck plate 31. A lead-in-taper 173 is provided at the bottom of the socket rod 44 so that horizontal misalignment may be accommodated between the transport 34 and the locating pin 33 when the cart 27 picks up the transport 34. The phantom positions of the pin 33 serve to show the degrees of horizontal misalignment which may be accommodated. Figure 18 shows the pallet locking pin 42 in the fully retracted position from the pallet 13 and pallet bore 174. The lever 147 of the crankshaft is shown rotated in the furthermost counterclockwise direction, thus retracting the locking pin 42. The locking pin 42 has a side slot 156 for receiving the crankshaft lever 147. A hardened replaceable nose cap 175 is received on the top of the locking pin 42. The nose cap 175 has a slight taper. The pallet locking pin 42 is journalled in a flanged guide bushing 157 secured to the transport housing 35. The flanged bushing 157 has a seal 176 at its top end and a grease fitting 177 provided in the flange 178 of the bushing 157 serves to introduce lubricant to assist the pin 42 in sliding. The locking pin 42 has a small diameter straight pin 179 extending radially into a guide slot 180 in the guide bushing 157 to prevent the locking pin 42 from rotating.

In Figures 17a, 18a and 19a, the deck plate 31 is raised to a position where the ball castor 32 contacts the locating pad 159 of the transport 34 and begins the initial lift. As has been explained previously, the lifting of the transport 34 enables the crank 46 (Figure 11) to rotate in a clockwise direction under the influence of the socket rod biasing spring 169. The socket rod 44 therefor begins its descent from the bottom plate 37 of the transport housing 35 as the locating bushing 104 of the transport 34 is leaving the locaing pin 73 in Figure 19a. Simultaneously, with the clockwise rotation of the crankshaft, the crank lever 147 lifts the pallet locking pin 42 into engagement with the pallet bore 174.

Continued upward motion of the deck plate 31 as shown in Figures 17b, 18b and 19b, illustrates the "fully raised" position, wherein the transport 34 is vertically positioned on the call castor 32 and horizontally positioned by virture of the socket rod 44 fully extending from the bottom plate 37 of the transport 35 into engagement with the deck plate locating pin 33. Figure 18b illustrates that continued rotation of the crank 46 moves the lever 147 along a ramp 181 tangent to the circular lever path machined on the pallet locking pin 42 to prevent the pin 42 from backing down. In these positions, the pallet transport 34 and pallet 13 are carried through the system on the wire guided cart 27.

It may be readily appreciated that the sequence shown in Figures 17, 17a and 17b is reversed when the pallet transport 34 enters the docking station 69 and the deck plate 31 begins to descend.

## Claims

1. A palletised part-handling apparatus comprising a plurality of pallets (13) as common tool or workpiece bases, moveable guided carts (27) for transferring said pallets from one station to another, pallet transport means (34) on each cart for supporting and locking a pallet during transfer movement, a stationary docking station (69) for receiving a transferred cart and pallet and means (147) for releasing said pallet from said pallet transport means at said docking station, further comprising holding means for supporting and locking said pallet transport means on said cart during transfer movement and means (113) for releasing said pallet transport means from said holding means to said docking station whereby the docking station (69) includes means (78, 79, 80) for receiving said pallet transport means at a predetermined position.

2. Apparatus according to Claim 1 wherein said means (147) for releasing said pallet is arranged to be actuated in response to actuation of said means for releasing said pallet transport means (34).

3. Apparatus according to Claim 1 wherein the pallet transport means includes a transport housing (35), a pallet guideway (40, 41) on said housing and a moveable pallet locking pin (42) in said housing, proximal said guideway, the stationary docking station (69) has a rail (78) for supporting said transport housing and locating means (72, 73) for locating said transport housing relative to said rail in horizontal and vertical directions, wherein there is provided means (30) for reversibly moving said transport housing in vertical directions and wherein said means for releasing said pallet includes means (46, 169) for moving said pallet locking pin in response to vertical movement of said housing (35).

4. Apparatus according to Claim 3 wherein said holding means includes a movable transport locking rod (44) in said housing and wherein said means (113) for releasing said pallet transport means includes means for moving said transport locking rod in response to vertical movement of said housing (35).

5. Apparatus according to Claim 4 wherein said means for moving the pallet locking pin (42) and said means for moving the transport locking rod (44) include a common crank (46) and crankshaft (45) and wherein said crank is engageable with said stationary docking station (69).

6. Apparatus according to Claim 5 wherein said crank (46) and crankshaft (45) are normally urged in one rotary direction by a biasing spring (169).

7. A method of interchanging a workpiece between a cart (27) and a working station (66), wherein the workpiece is secured in a fixed position on a pallet (13), the pallet is supported on a pallet transport means (34), the pallet transport means is supported on the cart, the cart, bearing the pallet transport means, the pallet and the workpiece, is moved to a docking station (69), during movement of the cart (27) to the docking station (69), movement of the pallet (13) relative to the pallet transport means (34) and movement of the pallet transport means relative to the cart is restrained, the pallet transport means, bearing the pallet and the workpiece, is transferred from the cart to a support (78, 79, 80) at the docking station and is set in a predetermined position on the support and wherein the pallet and the workpiece borne thereby are moved from the pallet transport means into the working station (66), whilst the pallet transport means remains on the support in the docking station (69).

8. A method according to Claim 7 wherein the cart (27) moves away from the docking station (69) whilst the pallet transport means (34) remains on the support (78, 79, 80) in the docking station.

9. A method according to Claim 7 wherein the workpiece and the pallet (13) are subsequently returned from the working station (66) to the pallet transport means (34) in the docking station (69), the cart (27) then picks up the pallet transport means (34) from the docking station and wherein, during raising of the pallet transport means (34) by the cart (27) relative to the docking station (69), a spring (169) operates means (42) for locking the pallet (13) in a fixed position on the pallet transport means (34) and operates means (44) for locking the pallet transport means in a fixed position on the cart (27).

**Patentansprüche**

1. Vorrichtung zum Transportieren von Werkstücken, mit einer Mehrzahl von Trägern (13) als gemeinsame Werkzeug-oder Werkstückbasis, beweglich geführten Wagen (27) zum Überführen der Träger von einer Station zu einer anderen, Trägertransportmitteln (34) auf jedem Wagen zum Stützen und Verriegeln eines Trägers während der Überführungsbewegungen, einer stationären Dockstation (69) zum Aufnehmen eines überführten Wagens und der Träger und Mittel (147) zum Übergeben des Trägers von dem Trägertransportmittel zu der Dockstation, weiter mit Haltemitteln zum Stützen und Verriegeln des Trägertransportmittels au dem Wagen während der Übergabebewegungen und Mitteln (113) zur Übergabe der Trägertransportmittel von den Haltemitteln zu der Dockstation, wobei die Dockstation (69) Mittel (78, 79, 80) aufweist zur Aufnahme der Trägertransportmittel in einer vorgegebenen Position.

2. Vorrichtung nach Anspruch 1, wobei das Mittel (147) zur Übergabe des Trägers eingerichtet ist zur Betätigung ansprechend auf eine Betätigung des Mittels zum Übergeben des Trägertransportmittels (34).

3. Vorrichtung nach Anspruch 1, wobei das Trägertransportmittel ein Transportgehäuse (35), einen Trägerführungsweg (40, 41) auf dem Gehäuse und einen beweglichen Trägerverriegelungsstift (42) in dem Gehäuse benachbart dem Führungsweg aufweist, wobei die stationäre Dockstation (69) eine Schiene (78) zum Stützen des Transportgehäuses und der Ausrichtmittel (72, 73) zum Ausrichten des Transportgehäuses relativ zu der Schiene in der horizontalen und in der vertikalen Richtung hat, und weiter Mittel (30) vorgesehen sind zum umkehrbaren Bewegen des Transportgehäuses in vertikalen Richtungen und die Mittel zum Freigeben des Trägers Mittel (46, 169) aufweisen zum Bewegen des Trägerverriegelungsstifts ansprechend auf eine vertikale Bewegung des Gehäuses (35).

4. Vorrichtung nach Anspruch 3, wobei das Haltemittel eine bewegliche Tranportverriegelungsstange (44) in dem Gehäuse aufweist und wobei die Mittel (113) zum Freigeben des Trägertransportmittels ein Mittel aufweisen zum Bewegen der Transportverriegelungsstange ansprechend auf eine vertikale Bewegung des Gehäuses (35).

5. Vorrichtung nach Anspruch 4, wobei das Mittel zum Bewegen des Trägerverriegelungsstifts (42) und des Mittels zum Bewegen der Transportverriegelungsstange (44) eine gemeinsame Kurbel (46) und eine Kurbelwelle (45) aufweisen und wobei die Kurbel mit der stationären Dockstation (69) in Eingriff gebracht werden kann.

6. Vorrichtung nach Anspruch 5, wobei die Kurbel (46) und die Kurbelwelle (45) durch eine Vorspannfeder (169) normalerweise in eine Drehrichtung gezwungen werden.

7. Verfahren zum Austauschen eines Werkstücks zwischen einem Wagen (27) und einer Bearbeitungsstation (66), wobei das Werkstück in einer festen Position auf einem Träger (13) befestigt ist, der Träger auf einem Trägertransportmittel gelagert ist, das Trägertransportmittel auf dem Wagen gelagert ist und der Wagen, der das Trägertransportmittel, den Träger und das Werkstück trägt, zu einer Dockstation (69) bewegt wird, während der Bewegung des Wagens (27) zu der Dockstation (69) eine Bewegung des Trägers (13) relativ zu dem Trägertransportmittel (34) und eine Bewegung des Trägertransportmittels relativ zu dem Wagen verhindert wird, das Wagentransportmittel, das den Träger und das Werkstück trägt, von dem Wagen zu einem Support (78, 79, 80) an der Dockstation übergeben wird und in eine vorgegebene Position auf dem Support gebracht wird und wobei der Träger und das Werkstück, das von diesem getragen wird, von dem Trägertransportmittel in die Bearbeitungsstation (88) bewegt wird, während das Trägertransportmittel auf dem Support in der Dockstation (69) verbleibt.

8. Verfahren nach Anspruch 7, wobei der Wagen (78) sich von der Dockstation (69) weg bewegt, während das Trägertransportmittel (34) auf dem Support (78, 79, 80) in der Dockstation verbleibt.

9. Verfahren nach Anspruch 7, wobei das Werkstück und der Träger (13) nachfolgend von der Bearbeitungsstation (66) dem Trägertransportmittel (34) in der Dockstation (69) zurückgegeben werden, der Wagen (27) sodann das Trägertransportmittel (34) von der Dockstation aufnimmt und wobei während des Anhebens des Trägertransportmittels (34) durch den Wagen (27) relativ zu der Dockstation (69) eine Feder (169) Mittel (42) zum Verriegeln des Trägers (13) in einer festen Position auf dem Trägertransportmittel (34) und Mittel (44) zum Verriegeln des Transportmittels in einer festen Position auf dem Wagen (27) betätigt.

**Revendications**

1. Appareil de manipulation de pièces sur supports comportant une pluralité de supports (13) formant des bases d'outils ou de pièces à usiner communes, des chariots mobiles guidés (27) pour transférer lesdits supports d'un poste à l'autre, des moyens de transport de supports (34) sur chaque chariot pour supporter et verrouiller un support durant des mouvements de transfert, un poste d'amarrage stationnaire (69) pour recevoir un support et un chariot transférés et des moyens (147) pour libérer ledit support desdits moyens de transport de supports dans ledit poste d'amarrage, comportant de plus des moyens de maintien pour supporter et pour verrouiller lesdits moyens de transport de supports sur ledit chariot durant les mouvements de transfert et des moyens (113) pour libérer lesdits moyens de transport de supports desdits moyens de maintien dudit poste d'amarrage, grâce auquel le poste d'amarrage (69) comporte des moyens (78, 79, 80) pour recevoir lesdits moyens de transport de supports dans une position prédéterminée.

2. Appareil selon la revendication 1 dans lequel lesdits moyens (147) pour libérer ledit support sont conçus pour être actionnés en réponse à l'actionnement desdits moyens pour libérer lesdits moyens de transport de supports (34).

3. Appareil selon la revendication 1 dans lequel les moyens de transport de supports comportent un boîtier de transport (35), une glissière de guidage de supports (40, 41) sur ledit boîtier et une broche de verrouillage de support mobile (42) dans ledit boîtier, à proximité de ladite glissière de guidage, le poste d'amarrage stationnaire (69) possède une barre (78) pour supporter ledit boîtier de transport et des moyens de positionnement (72, 73) pour positionner ledit boîtier de transport par rapport à ladite barre dans les directions horizontale et verticale, dans lequel sont disposés des moyens (30) pour déplacer de façon réversible ledit boîtier de transport dans les directions verticales et dans lequel lesdits moyens pour libérer ledit support comportent des moyens (46, 169) pour déplacer ladite broche de verrouillage de support en réponse au déplacement vertical dudit boîtier (35).

4. Appareil selon la revendication 3 dans lequel lesdits moyens de maintien comportent une tige de verrouillage du transporteur mobile (44) dans ladite boîtier et dans lequel lesdits moyens (113) pour libérer lesdits moyens de transport de supports comportent des moyens pour déplacer ladite tige de verrouillage du transporteur en réponse au déplacement vertical dudit boîtier (35).

5. Appareil selon la revendication 4 dans lequel lesdits moyens pour déplacer la broche de verrouillage du support (42) et lesdits moyens pour déplacer la tige de verrouillage du transporteur (44) comportent un bras de manivelle (46) et un vilebrequin (45) communs et dans lequel ledit bras de manivelle peut être engrené avec ledit poste d'amarrage stationnaire (69).

6. Appareil selon la revendication 5 dans lequel lesdits bras de manivelle (46) et vilebrequin (45) sont normalement poussés dans une direction de rotation par un ressort de tension (169).

7. Procédé pour échanger une pièce à usiner entre un chariot (27) et un poste de travail (66), dans lequel la pièce à usiner est fixée dans une position fixe sur un support (13), le support est supporté sur des moyens de transport de supports (34), les moyens de transport de support sont supportés sur le chariot, le chariot, portant les moyens de transport de supports, le support et la pièce à usiner, est déplacé vers un poste d'amarrage (69), durant le déplacement du chariot (27) vers le poste d'amarrage (69), le déplacement du support (13) par rapport aux moyens de transport de supports (34) et le déplacement des moyens de transport de supports par rapport au chariot est empêché, les moyens de transport de supports, portant le support et la pièce à usiner, sont transférés à partir du chariot sur un dispositif de support (78, 79, 80) dans le poste d'amarrage et sont mis dans une position prédéterminée sur le dispositif de support et dans lequel le support et la pièce à usiner portés par ceux-ci sont amenés des moyens de transport de supports au poste de travail (66), tandis que les moyens de transport de supports restent sur le dispositif de support dans le poste d'amarrage (69).

8. Procédé selon la revendication 7 dans lequel le chariot (27) s'éloigne du poste d'amarrage (69) tandis que les moyens de transport de supports (34) restent sur le dispositif de support (78, 79, 80) dans le poste d'amarrage.

9. Procédé selon la revendication 7 dans lequel la pièce à usiner et le support (13) sont ensuite renvoyés depuis le poste de travail (66) jusqu'aux moyens de transport de supports (34) dans le poste d'amarrage (69), le chariot (27) soulève ensuite les moyens de transport de supports (35) du poste d'amarrage et dans lequel, durant l'élévation des moyens de transport de supports (34) par le chariot (27) par rapport au poste d'amarrage (69), un ressort (169) actionne des moyens (42) pour verrouiller le support (13) dans une position fixe sur les moyens de transport de supports (34) et actionne des moyens (44) pour verrouiller les moyens de transport de supports dans une position fixe sur le chariot (27).

EP 0 166 558 B1

Fig. 2

Fig. 1

PRIOR ART

Fig. 3

Fig. 4

1

EP 0 166 558 B1

Fig. 9

Fig. 6

Fig. 5

2

*Fig.7*

*Fig.8*

Fig. 10

Fig. 12

Fig. 13

Fig. 11

*Fig.14*

EP 0 166 558 B1

Fig. 15

Fig. 16

EP 0 166 558 B1

Fig.17b

Fig.18b

Fig.19b

Fig.17a

Fig.18a

Fig.19a

Fig.17

Fig.18

Fig.19